# EUROPÄISCHE PATENTSCHRIFT

(11) **EP 1 362 063 B1**
(45) Veröffentlichungstag und Bekanntmachung des Hinweises auf die Patenterteilung: **16.11.2005**
(21) Anmeldenummer: 02704643.2
(22) Anmeldetag: 07.01.2002
(51) Int. Cl.: C08F 2/22, C08F 4/14, C08F 10/10

(54) **VERFAHREN ZUR HERSTELLUNG HOCHREAKTIVER POLYISOBUTENE**
METHOD FOR PRODUCING HIGHLY REACTIVE POLYISOBUTENES
PROCEDE DE PRODUCTION DE POLYISOBUTENES FORTEMENT REACTIFS

(30) Priorität: 08.01.2001 DE 10100440
(43) Veröffentlichungstag der Anmeldung: 19.11.2003
(73) Patentinhaber: BASF Aktiengesellschaft, 67056 Ludwigshafen (DE)
(72) Erfinder: AUER, Heinz, 68809 Neulussheim (DE); KANNE, Ulrich, 67133 Maxdorf (DE); DE VOS, Andre, B-2280 Grobbendonk (BE)
(74) Vertreter: Thalhammer, Wolfgang
(86) Internationale Anmeldenummer: PCT/EP2002/000065
(87) Internationale Veröffentlichungsnummer: WO 2002/053601

(56) Entgegenhaltungen:
- EP-A- 0 628 575
- EP-A- 0 969 026
- WO-A-99/31151
- DE-A- 10 028 585
- DE-A- 19 952 031

## Beschreibung

Die vorliegende Erfindung betrifft ein Verfahren zur Herstellung hochreaktiver Polyisobutene.

Als hochreaktive Polyisobutene werden solche angesprochen, die einen hohen Gehalt an endständigen Vinylidengruppen von vorzugsweise mehr als 60 Mol-% aufweisen. Hochreaktive Polyisobutene sind als Zwischenprodukte zur Herstellung von Additiven für Schmier- und Kraftstoffe begehrt.

Derartige hochreaktive Polyisobutene sind z. B. nach dem Verfahren der EP 0 628 575 durch kationische Polymerisation von Isobuten in flüssiger Phase mit Hilfe von Bortrifluorid und eines sekundären Alkohols bei Temperaturen von 0 °C bis -60 °C erhältlich.

Die älteren Patentanmeldungen DE 199 48 947.5, DE 199 52 031.3, DE 199 52 030.5, DE 100 28 585.6 und DE 100 35 298.7 betreffen Verbesserungen oder vorteilhafte Ausgestaltungen eines derartigen Verfahrens.

Nach Erreichen des angestrebten Molekulargewichts wird der Polymerisationskatalysator deaktiviert und auf diese Weise die Polymerisation abgebrochen. Die EP 0 628 575 empfiehlt, den Reaktionsaustrag zu diesem Zweck in ein Medium, wie Wasser, Alkohole, Acetonitril, Ammoniak oder wässrige Lösungen von Mineralbasen, wie Alkalimetall- und Erdalkalimetallhydroxidlösungen, Lösungen von Carbonaten dieser Metalle, zu leiten.

Für die Herstellung hochreaktiver Polyisobutene ist es kritisch, dass nach Erreichen des angestrebten Molekulargewichts der Polymerisationskatalysator möglichst rasch und quantitativ deaktiviert wird, um Isomerisierungsreaktionen zu Polyisobutenmolekülen zu verhindern, bei denen die Doppelbindung eine thermodynamisch günstigere Position im Inneren des Moleküls einnimmt.

Organische Abbruchmittel wie Acetonitril und Alkohole weisen den Vorteil auf, dass sie mit der organischen Reaktionsphase mischbar sind und daher in dieser leicht gleichmäßig verteilbar sind. Sie haben allerdings den Nachteil, dass ihre Affinität zum BF₃-Molekül vergleichsweise gering ist und sie daher nur zu einer schleichenden Katalysatordeaktivierung führen. Da sie außerdem als Phasenvermittler wirken können, erschweren sie die anschließende Extraktion mit Wasser zur Entfernung der Katalysatordeaktivierungsprodukte.

Wässrige Abbruchmittel, wie insbesondere Wasser selbst, haben den Vorteil, dass die Katalysatordeaktivierung und extraktive Entfernung der Katalysatordeaktivierungs- bzw. -hydrolyseprodukte gleichzeitig erfolgen kann. Nachteilig ist dabei allerdings, dass die wässrige Phase mit der organischen Reaktionsphase nicht mischbar ist und die Katalysatordeaktivierung lediglich an der Phasengrenzfläche stattfinden kann. In zusammenhängenden Bereichen der organischen Reaktionsphase kann die Polymerisationsreaktion noch fortschreiten bzw. unerwünschte Isomerisierungen ablaufen, nachdem die organische Reaktionsphase mit einem wässrigen Abbruchmittel in Kontakt gebracht wurde.

Die JP-A 7196724 offenbart ein Verfahren zur Entfernung eines zur Durchführung einer kationischen Polymerisation verwendeten LewisSäure-Katalysators aus der organischen Reaktionsphase, bei dem die Reaktionsphase mit Wasser oder angesäuertem Wasser behandelt wird und eine Auftrennung in eine das Polymer enthaltende organische Phase und eine den gelösten Katalysator enthaltende wässrige Phase erfolgt. Das Wasser oder angesäuerte Wasser wird vorzugsweise vorerwärmt, um die Entfernung des Katalysators zu begünstigen. Die Menge des Wassers oder angesäuerten Wassers beträgt wenigstens 5 Vol-%, vorzugsweise wenigstens 20 Vol-% und insbesondere wenigstens 40 Vol-%, bezogen auf die Reaktionsphase. Die Herstellung hochreaktiver Polyisobutene ist nicht angesprochen.

Die US 4,940,833 beschreibt ein Verfahren zur Aufarbeitung eines flüssigen Polymerisationsreaktionsgemischs, das Olefinmonomer, Katalysatorreste und Katalysatordeaktivierungsprodukte enthält, bei dem das Gemisch mit Wasser gewaschen und die organische und wässrige Phase anschließend getrennt werden. Als bevorzugte Katalysatordeaktivatoren sind sauerstoffhaltige Verbindungen, wie Alkohole, Dicarbonylverbindungen und/oder Alkylenoxide genannt, wobei Methanol am stärksten bevorzugt ist.

Der vorliegenden Erfindung liegt die Aufgabe zugrunde, ein Verfahren zur Herstellung hochreaktiver Polyisobutene bereitzustellen, das eine rasche und im Wesentlichen quantitative Katalysatordeaktivierung und eine einfache Extraktion der Katalysatordeaktivierungsprodukte gestattet.

Erfindungsgemäß wird diese Aufgabe durch ein Verfahren zur Herstellung hochreaktiver Polyisobutene gelöst, bei dem man
a) Isobuten in Gegenwart eines Komplexes von Bortrifluorid und wenigstens eines Cokatalysators in flüssiger organischer Phase bei einer Reaktionstemperatur von -60 bis -4 °C polymerisiert,
b) die im Wesentlichen Reaktionstemperatur aufweisende organische Phase mit einer ersten Portion Wasser, deren Temperatur wenigstens 80 °C, vorzugsweise wenigstens 90 °C, über der Reaktionstemperatur liegt, unter Bildung einer Emulsion innig in Kontakt bringt, die fein dispergierte Wassertröpfchen in der organischen Phase enthält,
c) die Emulsion unter Bildung einer zusammenhängenden, überwiegend organischen Phase und einer zusammenhängenden, überwiegend wässrigen Phase mit einer zweiten Portion Wasser versetzt, und
d) die organische Phase von der wässrigen Phase trennt.

Die Erfindung beruht auf dem Befund, dass zur weitgehend quantitativen Extraktion des Bortrifluorid-Cokatalysator-Komplexes bzw. der Hydrolyseprodukte davon aus der organischen Reaktionsphase eine Mindestmenge an wässriger Phase, bezogen auf die organische Reaktionsphase, nicht unterschritten werden darf. Werden jedoch die organische Reaktionsphase und eine Menge an wässriger Phase, die der erforderlichen Mindestmenge entspricht oder größer ist als diese, in Kontakt gebracht, so zeigt sich, dass die Phasen eine große Tendenz zur Phasentrennung unter Bildung einer zusammenhängenden organischen Phase und einer zusammenhängenden wässrigen Phase aufweisen. Dieser Umstand erschwert eine feine Dispergierung der wässrigen Phase in der organischen Reaktionsphase, die nötig ist, um eine rasche, quantitative und gleichmäßige Katalysatordeaktivierung zu erreichen. Beim Versuch, die Katalysatordeaktivierung mit einer geringeren Menge Wasser durchzuführen, hat sich gezeigt, dass es beim Kontakt der wässrigen Phase mit der Reaktionsphase, die eine Temperatur unterhalb des Gefrierpunkts von Wasser aufweist, zur Bildung von Eiskristallen kommen kann, die zur Verstopfung von Rohrleitungen und/oder Armaturen führen und keine zufriedenstellende Katalysatordeaktivierung gestatten.

Das erfindungsgemäße Verfahren vermeidet alle vorstehend geschilderten Probleme. Insbesondere ist es überraschend, dass es beim Kontakt der Reaktionsphase mit der ersten Portion Wasser, deren Temperatur wenigstens 80 °C über der Reaktionstemperatur liegt, nicht zu unerwünschten Isomerisierungsreaktionen kommt.

Vorzugsweise beträgt die Summe der ersten und zweiten Portion Wasser 5 bis 100 Gew.-%, insbesondere 20 bis 90 Gew.-%, bezogen auf das Gewicht der organischen Phase. Das Gewichtsverhältnis der ersten Portion zur zweiten Portion liegt vorzugsweise im Bereich von 1:10 bis 10:1, insbesondere 1:5 bis 5:1, besonders bevorzugt 1:5 bis 1:1,5.

Vorzugsweise weist die durch Inkontaktbringen der organischen Phase mit der ersten Portion Wasser erhaltene Emulsion eine Mischtemperatur von +5 bis +50 °C, insbesondere von +10 bis +45 °C, auf.

Die erste und/oder zweite Portion Wasser können gelöste Substanzen, wie Mineralbasen, z. B. Alkalimetall- oder Erdalkalimetallhydroxide, -carbonate, Ammoniak oder Säuren, wie Salzsäure etc., enthalten. Da jedoch damit in der Regel kein weitergehender Vorteil verbunden ist, enthalten die erste und zweite Portion Wasser vorzugsweise keine nennenswerten Mengen gelöster Substanzen. Leitungs- oder Flusswasser ist geeignet. Im Allgemeinen wird aber entmineralisiertes Wasser bevorzugt. Der pH-Wert der ersten und zweiten Portion Wasser liegt im Allgemeinen im Bereich von 6 bis 10.

Das erfindungsgemäße Verfahren eignet sich zur Herstellung von Polyisobutenen mit einem zahlenmittleren Molekulargewicht von 500 bis 5000 und ist besonders geeignet zur Herstellung von Polyisobutenen mit einem zahlenmittleren Molekulargewicht von 1800 bis 5000. Die Polymerisation in Schritt a) des erfindungsgemäßen Verfahrens wird daher vorzugsweise so geführt, dass Polyisobutenmoleküle mit einem zahlenmittleren Molekulargewicht von 1800 bis 5000 erhalten werden.

Die organische Phase weist zum Zeitpunkt des Inkontaktbringens mit der ersten Portion Wasser im Wesentlichen Reaktionstemperatur auf, d. h. sie wird nach Erreichen des gewünschten Polymerisationsgrads nicht nennenswert erwärmt, bevor der Katalysator durch Zugabe der ersten Portion Wasser deaktiviert wird.

Der Zusatz der ersten Portion Wasser erfolgt vorzugsweise mittels einer Düse in eine Rohrleitung, durch die die organische Reaktionsphase geführt wird. Die Austrittsöffnung der Düse ist vorzugsweise in Fließrichtung der organischen Phase angeordnet. Die Bildung der Emulsion wird unterstützt, wenn der Strom der organischen Phase im Bereich der Zugabe der ersten Portion Wasser eine turbulente Strömung aufweist. Maßnahmen zur Erzeugung turbulenter Strömungen sind dem Fachmann bekannt. Die erste Portion Wasser weist typischerweise eine Temperatur von 80 bis 160 °C auf. Temperaturen von mehr als 100 °C erfordern, dass das Wasser bei einem Druck gehalten wird, der höher als Umgebungsdruck ist.

Die Zugabe der zweiten Portion Wasser kann ebenfalls mit Vorteil über eine Düse in den Strom der durch Inkontaktbringen der organischen Phase mit der ersten Portion Wasser erhaltenen Emulsion erfolgen. Die Düse zur Zugabe der zweiten Portion Wasser ist dann stromabwärts beabstandet zur Düse, über die die erste Portion Wasser zugegeben wird, angeordnet. Einen geeigneten Abstand der Düsen kann der Fachmann anhand einfacher Versuche ohne Weiteres ermitteln. Der optimale Abstand ist in der Regel abhängig von der Strömungsgeschwindigkeit der organischen Phase. Er ist in der Regel so bemessen, dass eine Zeitspanne von 2 bis 1000 Sekunden, insbesondere 2 bis 200 Sekunden, vom Inkontaktbringen eines Volumenelements der organischen Phase mit der ersten Portion Wasser bis zur Zugabe der zweiten Portion Wasser verstreicht. Die zweite Portion Wasser weist typischerweise eine Temperatur von 40 bis 80 °C auf.

Nach der Zugabe der zweiten Portion Wasser kann das Gemisch aus organischer Phase und wässriger Phase zur Trennung der beiden Phasen in eine Beruhigungszone geleitet und aufgetrennt werden. Dies geschieht zweckmäßigerweise in einem liegenden, kontinuierlich betriebenen Phasentrenngefäß, das mit geringer Strömungsgeschwindigkeit durchflossen wird. Bedingt durch den Dichteunterschied der Phasen trennt sich das Gemisch der organischen Phase und wässrigen Phase im Erdschwerefeld, so dass beide Phasen in zusammenhängender Form und weitgehend fremdphasenfrei übereinander geschichtet vorliegen.

Während die Abtrennung der Hauptmenge der wässrigen Phase in der Regel keinerlei Probleme bereitet, enthält die organische Phase oft noch dispergierte Wassertröpfchen, die nicht spontan koaleszieren. Eine vollständige Phasentrennung aufgrund der Dichtedifferenz erfordert eine sehr lange Verweilzeit, wodurch eine wirtschaftliche Abtrennung der letzten Mengen an wässriger Phase nicht möglich ist. Um die nach der Abtrennung der Hauptmenge der wässrigen Phasen noch vorhandenen dispergierten Tröpfchen der wässrigen Phase zu entfernen, leitet man die noch dispergierte Wassertröpfchen enthaltende organische Phase mit Vorteil durch eine Apparatur mit Koaleszenz-fördernden Einbauten und trennt die koaleszierte wässrige Phase von der organischen Phase ab. Bei den Koaleszenz-fördernden Einbauten handelt es sich in der Regel um Füllkörper, Koaleszenzflächen oder feinporige Einbauten.

Bei den Koaleszenzflächeneinbauten handelt es sich im Allgemeinen um Plattenpakete mit gewellten oder schräg gestellten Flächen, an denen sich dispergierte Tröpfchen anlagern und zunächst einen Film ausbilden. Wenn dieser Film die Einzelplatte umschließt und dick genug ist, dann bilden sich große Tropfen der dispergierten Phase an der Plattenkante aus und fallen nach unten. Sie bilden dann eine Schicht, die mechanisch leicht abzutrennen ist. Bei feinporigen Einbauten zwingt die innere Struktur der Einbauten die feindispergierten Tropfen zum Kontakt mit der inneren Oberfläche, die dann einen Film bilden und als vereinigte größere Tropfen die hohle Struktur der feinporigen Einbauten verlassen.

Als Füllkörper sind die üblicherweise bei der Destillation verwendeten Füllkörper geeignet. Vorzugsweise leitet man die dispergierte Tröpfchen der wässrigen Phase enthaltende organische Phase durch eine Füllkörperschüttung. Durch Benetzung der großen Füllkörperoberfläche kommt es zur Oberflächenkoaleszenz und gleichzeitig durch Tropfenbewegung zur Tropfen-Tropfen-Koaleszenz.

Besonders bewährt haben sich sogenannte Koaleszierfilter in Form von Filterkerzen, die z. B. aus Polypropylen bestehen.

Es hat sich als günstig erwiesen, die von der Hauptmenge der wässrigen Phase befreite organische Phase vor dem Durchleiten durch die Apparatur mit Koaleszenz-fördernden Einbauten mit einer dritten Portion Wasser zu versetzen. Die dritte Portion Wasser beträgt z. B. 0,5 bis 10 Gew.-%, insbesondere 2 bis 7 Gew.-%, bezogen auf die organische Phase. Die Temperatur der dritten Portion ist nicht kritisch und beträgt üblicherweise 20 bis 60 °C.

Die Polymerisation von Isobuten kann kontinuierlich oder diskontinuierlich erfolgen, erfolgt jedoch vorzugsweise kontinuierlich. Verfahren zur kontinuierlichen Polymerisation in Gegenwart eines Komplexes von Bortrifluorid und wenigstens eines Cokatalysators in flüssiger organischer Phase sind an sich bekannt. Bei einem kontinuierlichen Verfahren wird kontinuierlich ein Teil der im Polymerisationsreaktor entstandenen Reaktionsmischung ausgetragen. Eine dem Austrag entsprechende Menge an Einsatzmaterialien, hier Isobuten bzw. Isobuten-haltiger Zulauf, wird dem Polymerisationsreaktor kontinuierlich zugeführt. Das Verhältnis von der im Polymerisationsreaktor befindlichen Stoffmenge zu der Menge, die ausgetragen wird, bestimmt sich durch das Umlauf/Zulauf-Verhältnis, das bei der kontinuierlichen Polymerisation von Isobuten zu Polyisobuten in der Regel im Bereich von 1000:1 bis 1:1, bevorzugt im Bereich von 500:1 bis 5:1 und insbesondere im Bereich von 50:1 bis 200:1 liegt. Die mittlere Verweildauer des zu polymerisierenden Isobutens im Polymerisationsreaktor kann fünf Sekunden bis mehrere Stunden betragen. Verweilzeiten von 1 bis 30 Minuten, insbesondere 2 bis 20 Minuten, sind besonders bevorzugt.

Die Polymerisation des Isobutens erfolgt in den üblichen Reaktoren, wie Rührkessel, Rohr-, Rohrbündel- und Schlaufenreaktoren, wobei Schlaufenreaktoren, d. h. Rohr(bündel)reaktoren mit Rührkesselcharakteristik, bevorzugt sind. Besonders günstig sind Rohrreaktoren mit Rohrquerschnitten, die in Teilbereichen zu Turbulenzen führen.

Die Polymerisation wird bei einer Reaktionstemperatur von -60 bis -4 °C, insbesondere -25 bis -5 °C, durchgeführt. Die Polymerisationswärme wird entsprechend mit Hilfe einer Kühlvorrichtung abgeführt. Diese kann beispielsweise mit flüssigem Ammoniak als Kühlmittel betrieben werden. Eine andere Möglichkeit, die Polymerisationswärme abzuführen, ist die Siedekühlung. Dabei wird die freiwerdende Wärme durch teilweises Verdampfen des Reaktionsgemischs, z. B. des Isobutens und/oder anderer leicht flüchtiger Bestandteile des Isobutenzulaufs oder eines leicht flüchtigen Verdünnungsmittels, abgeführt. Vorzugsweise arbeitet man unter isothermen Bedingungen, d. h. die Temperatur der flüssigen organischen Reaktionsphase im Polymerisationsreaktor hat einen stationären Wert und ändert sich während des Betriebs des Reaktors nicht oder nur in geringem Maße.

Die Konzentration des Isobutens in der flüssigen Reaktionsphase liegt in der Regel im Bereich von 0,2 bis 50 Gew.-%, vorzugsweise im Bereich von 0,5 bis 20 Gew.-%, bezogen auf die flüssige organische Phase.

Als Einsatzstoffe eignen sich sowohl Isobuten selbst als auch Isobuten-haltige C₄-Kohlenwasserstoffströme, beispielsweise C₄-Raffinate, C₄-Schnitte aus der Isobutan-Dehydrierung, C₄-Schnitte aus Steamcrackern, FCC-Crackern (fluid catalysed cracking), sofern sie weitgehend von darin enthaltenem 1,3-Butadien befreit sind. Geeignete C₄-Kohlenwasserstoffströme enthalten in der Regel weniger als 500 ppm, vorzugsweise weniger als 200 ppm, Butadien. Die Anwesenheit von 1-Buten, cis- und trans-2-Buten ist weitgehend unkritisch. Typischerweise liegt die Isobutenkonzentration in den C₄-Kohlenwasserstoffströmen im Bereich von 40 bis 60 Gew.-%. Bei Einsatz von C₄-Schnitten als Einsatzmaterial übernehmen die von Isobuten verschiedenen Kohlenwasserstoffe die Rolle eines inerten Verdünnungsmittels, wie nachstehend erläutert wird. Der Isobuten-haltige Zulauf kann geringe Mengen an Kontaminanten, wie Wasser, Carbonsäuren oder Mineralsäuren enthalten, ohne dass es zu kritischen Ausbeute- oder Selektivitätseinbußen kommt. Es ist zweckdienlich, eine Anreicherung dieser Verunreinigungen zu vermeiden, indem man solche Schadstoffe beispielsweise durch Adsorption an feste Adsorbentien, wie Aktivkohle, Molekularsiebe oder Ionenaustauscher, aus dem Isobuten-haltigen Zulauf entfernt.

Aufgrund der hohen Viskosität von Polyisobuten ist es vorteilhaft, die Polymerisation in Gegenwart eines inerten Verdünnungsmittels durchzuführen. Das verwendete inerte Verdünnungsmittel sollte geeignet sein, die während der Polymerisationsreaktion zu beobachtende Erhöhung der Viskosität der Reaktionslösung soweit zu verringern, dass die Abführung der entstehenden Reaktionswärme gewährleistet werden kann. Als Verdünnungsmittel sind solche Lösungsmittel oder Lösungsmittelgemische geeignet, die gegenüber den eingesetzten Reagenzien inert sind. Geeignete Verdünnungsmittel sind beispielsweise gesättigte Kohlenwasserstoffe, wie Butan, Pentan, Hexan, Heptan, Octan, z. B. n-Hexan, i-Octan, Cyclopentan, halogenierte Kohlenwasserstoffe, wie Methylchlorid, Dichlormethan oder Trichlormethan, sowie Mischungen der vorgenannten Verdünnungsmittel, wovon n-Hexan besonders bevorzugt ist. Vorzugsweise werden die Verdünnungsmittel vor ihrem Einsatz von Verunreinigungen wie Wasser, Carbonsäuren oder Mineralsäuren befreit, beispielsweise durch Adsorption an feste Adsorbentien, wie Aktivkohle, Molekularsiebe oder Ionenaustauscher.

Bortrifluorid wird zweckmäßigerweise in Form von gasförmigem Bortrifluorid eingesetzt, wobei technisches, noch geringe Mengen Schwefeldioxid und SiF₄ enthaltendes, vorzugsweise aber hochreines Bortrifluorid mit einer Reinheit von etwa 99,5 Gew.-% verwendet werden kann.

Geeignete Cokatalysatoren sind in der Regel sauerstoffhaltige Verbindungen, die vorzugsweise wenigstens ein zweibindiges Sauerstoffatom enthalten. Geeignete sauerstoffhaltige Verbindungen sind neben Wasser organische Verbindungen bis zu 30 Kohlenstoffatomen. Beispiele hierfür sind C₁-C₃₀-Alkanole und -Cycloalkanole, C₂-C₁₀-Diole, C₁-C₂₀-Carbonsäuren, C₄-C₁₂-Carbonsäureanhydride söwie C₂-C₂₀-Dialkylether. Hierunter bevorzugt werden einwertige Alkanole mit 1 bis 20 Kohlenstoffatomen, insbesondere mit 1 bis 4 Kohlenstoffatomen, die gegebenenfalls zusammen mit den C₁-C₂₀-Dialkylethern eingesetzt werden können. Als Cokatalysator sind einwertige sekundäre C₃-C₂₀-Alkanole besonders bevorzugt. Beispielhaft seien genannt Isopropanol, 2-Butanol, sec-Pentanol, sec-Hexanol, sec-Heptanol, sec-Octanol und dergleichen. Besonders bevorzugt werden 2-Butanol und insbesondere Isopropanol verwendet.

Vorzugsweise beträgt das Molverhältnis von Bortrifluorid zu Cokatalysator 1:1 bis 1:10, insbesondere 1:1,1 bis 1:5 und besonders bevorzugt 1:1,2 bis 1:2,5.

Die Konzentration des Komplexes von Bortrifluorid und Cokatalysator im Reaktor liegt in der Regel im Bereich von 0,01 bis 1 Gew.-%, bezogen auf die flüssige organische Phase, insbesondere im Bereich von 0,02 bis 0,7 Gew.-% und besonders bevorzugt im Bereich von 0,03 bis 0,5 Gew.-%.

Nach Erreichen des gewünschten Polymerisationsgrads wird die im Wesentlichen Reaktionstemperatur aufweisende organische Phase wie beschrieben mit einer ersten Portion Wasser und die erhaltene Emulsion anschließend mit einer zweiten Portion Wasser versetzt.

Das Isobutenpolymerisat weist in der Regel ein Gehalt an endständigen Vinylidengruppen von mehr als 60 Mol-%, insbesondere mehr als 80 Mol-% auf. Die Dispersität M_{w}/Mₙ beträgt vorzugsweise nicht mehr als 1,8, insbesondere nicht mehr als 1,6.

Die Aufarbeitung der von der wässrigen Phase befreiten organischen Phase zur Isolierung des gewünschten Polyisobutens erfolgt in üblicher Weise. Das Polyisobuten wird, in der Regel destillativ, von nicht umgesetzten Isobuten, inertem Verdünnungsmittel und gegebenenfalls Isobutenoligomeren befreit und fällt als Destillationsrückstand, z. B. als Sumpfprodukt einer Destillationskolonne, an.

Die vorliegende Erfindung wird durch die nachfolgenden Beispiele und Vergleichsbeispiele näher veranschaulicht.

### Beispiele

Zur Herstellung eines Polyisobutens wurde gemäß der EP-A 628 575, Beispiel 1, verfahren: Der eingesetzte Isobuten-haltige Zulauf entsprach folgender Zusammensetzung:

| | |
|---|---|
| Isobutan | < 1 Gew.-% |
| n-Butan | < 1 Gew.-% |
| 1-Buten | < 1 Gew.-% |
| trans-2-Buten | < 1 Gew.-% |
| cis-2-Buten | < 1 Gew.-% |
| Isobuten | etwa 45 Gew.-% |
| Hexan | etwa 54 Gew.-% |
| Butadien | < 50 ppm |
| Wasser | etwa 2 ppm |

Im Verlauf von einer Stunde wurden 6000 g des obigen Zulaufs auf der Saugseite eines Schlaufenreaktors zugeführt, der mit einer integrierten Umwälzpumpe ausgestattet war, dessen Rohrdurchmesser 30 mm und dessen Volumen 1000 ml betrug. Bezogen auf das Bortrifluorid (7,1 mmol/l) wurde die 1,6-fache molare Menge iso-Propanol zugesetzt. Der Reaktor wurde so gekühlt, dass die Temperatur im Reaktionsmedium -17 °C betrug. Die mittlere Verweilzeit des Reaktionsmediums im Reaktor lag bei 6,6 Minuten.

Der Reaktionsaustrag wurde daraufhin mit Hilfe einer Düse zunächst kontinuierlich mit X g pro Stunde Wasser von 90 °C intensiv vermischt und dadurch auf eine Temperatur von A °C gebracht. Anschließend wurde im Reaktionsaustrag/Wasser-Gemisch nach rund 12 Sekunden durch kontinuierliche Zugabe einer weiteren Menge von Y g pro Stunde 60 °C warmem Wasser eine mittlere Temperatur des Reaktionsaustrag/Wasser-Gemischs von B °C erreicht.

In einem 500 ml großen kontinuierlichen Phasentrenngefäß trennte man daraufhin die wässrige Phase von der organischen Produktphase ab und gab in letztere erneut mittels einer Düse eine dritte Menge Wasser von Z g pro Stunde und einer Temperatur von 40 °C kontinuierlich zu.

Das so erhaltene Gemisch leitete man kontinuierlich durch einen 100 ml Kerzenfilter und ein weiteres 500 ml Phasentrenngefäß, in dem erneut wässrige und organische Phase getrennt wurden.

Die organische Phase war nach dem Kerzenfilter und der beschriebenen letzten Phasentrennung völlig klar.

Von dem so behandelten Reaktionsaustrag wurden Analysen zur Beurteilung der Fluorabtrennung aus dem Reaktionsaustrag durchgeführt.

Des Weiteren wurden die für die Beurteilung der Produktqualität relevanten analytischen Daten des nach dem destillativen Entfernen der flüchtigen Bestandteile erhaltenen Polyisobutens ermittelt und nachfolgend in Tabellenform aufgelistet.

**Tabelle**

| Bsp. | A °C | B °C | X g/h | Y g/h | Z g/h | F ppm | Mn | D | Vin. % |
|---|---|---|---|---|---|---|---|---|---|
| 1 | 4 | 32 | 700 | 1700 | 0 | 38 | 2236 | 1,766 | 86,2 |
| 2 | 4 | 35 | 700 | 1900 | 0 | 37 | 2229 | 1,763 | 86,5 |
| 3 | 6 | 38 | 800 | 1900 | 0 | 34 | 2270 | 1,756 | 85,9 |
| 4 | 4 | 32 | 700 | 1700 | 50 | 26 | 2287 | 1,759 | 86,3 |
| 5 | 4 | 32 | 700 | 1700 | 100 | 21 | 2281 | 1,773 | 86,9 |
| 6 | 4 | 32 | 700 | 1700 | 150 | 17 | 2278 | 1,698 | 87,1 |

| Vgl.- Bsp. | | | | | | | | | |
|---|---|---|---|---|---|---|---|---|---|
| 7 | 4 | 4 | 2600¹⁾ | 0 | 0 | 121⁶⁾ | 2132 | 1,811 | 69,2 |
| 8 | -17 | 32 | 0 | 2600²⁾ | 0 | 42 | 2118 | 1,809 | 82,3 |
| 9 | ⁵⁾ | 32 | 700³⁾ | 1900⁴⁾ | 0 | - | - | - | - |
| mit A = Temperatur des Reaktionsaustrag/Wasser-Gemischs nach der ersten Wasserzugabe B = Temperatur des Reaktionsaustrag/Wasser-Gemischs nach der zweiten Wasserzugabe X = Menge der ersten Wasserzugabe Y = Menge der zweiten Wasserzugabe Z = Menge der dritten Wasserzugabe Mn = zahlengewichtetes mittleres Molekulargewicht D = Dispersizität Vin. = Vinylidengehalt | | | | | | | | | |

| | | | | | | | | | |
|---|---|---|---|---|---|---|---|---|---|
| ¹⁾ 2600 g/h Wasser von 23 °C | | | | | | | | | |
| ²⁾ 2600 g/h Wasser von 54 °C | | | | | | | | | |
| ³⁾ 700 g/h Wasser von 50 °C | | | | | | | | | |
| ⁴⁾ 1900 g/h Wasser von 65 °C | | | | | | | | | |
| ⁵⁾ Die Leitung zwischen erster und zweiter Wasserdosierung setzte sich im Verlauf von 4 h mit Eis zu. Die Anlage konnte mit diesen Zulaufmengen und Temperaturen nicht weiter betrieben werden. | | | | | | | | | |
| ⁶⁾ Deutliche Trübung in der organischen Phase erkennbar. | | | | | | | | | |

## Patentansprüche

1. Verfahren zur Herstellung hochreaktiver Polyisobutene, bei dem man
a) Isobuten in Gegenwart eines Komplexes von Bortrifluorid und wenigstens eines Cokatalysators in flüssiger organischer Phase bei einer Reaktionstemperatur von -60 bis -4 °C polymerisiert,
b) die im Wesentlichen Reaktionstemperatur aufweisende organische Phase mit einer ersten Portion Wasser, deren Temperatur wenigstens 80 °C über der Reaktionstemperatur liegt, unter Bildung einer Emulsion innig in Kontakt bringt, die fein dispergierte Wassertröpfchen in der organischen Phase enthält,
c) die Emulsion unter Bildung einer zusammenhängenden, überwiegend organischen Phase und einer zusammenhängenden, überwiegend wässrigen Phase mit einer zweiten Portion Wasser versetzt, und
d) die organische Phase von der wässrigen Phase trennt.

2. Verfahren nach Anspruch 1, bei dem die Summe der ersten und zweiten Portion Wasser 5 bis 100 Gew.-%, bezogen auf das Gewicht der organischen Phase, beträgt und das Gewichtsverhältnis der ersten Portion zur zweiten Portion im Bereich von 1:10 bis 10:1 liegt.

3. Verfahren nach Anspruch 1 oder 2, bei dem die durch Inkontaktbringen der organischen Phase mit der ersten Portion Wasser erhaltene Emulsion eine Mischtemperatur von +5 bis +50 °C aufweist.

4. Verfahren nach einem der vorhergehenden Ansprüche, bei dem man als Cokatalysator einen sekundären Alkohol mit 3 bis 20 Kohlenstoffatomen verwendet.

5. Verfahren nach einem der vorhergehenden Ansprüche, bei dem man in Schritt a) polymerisiert, bis Polyisobutenmoleküle mit einem zahlenmittleren Molekulargewicht von 1800 bis 5000 erhalten sind.

6. Verfahren nach einem der vorhergehenden Ansprüche, bei dem man zur Trennung der organischen Phase von der wässrigen Phase zuerst die Hauptmenge der wässrigen Phase entfernt, die noch dispergierte Wassertröpfchen enthaltende organische Phase durch eine Apparatur mit Koaleszenz-fördernden Einbauten leitet und die koaleszierte wässrige Phase von der organischen Phase abtrennt.

7. Verfahren nach Anspruch 6, bei dem man die von der Hauptmenge der wässrigen Phase befreite organische Phase vor dem Durchleiten durch die Apparatur mit Koaleszenz-fördernden Einbauten mit einer dritten Portion Wasser versetzt.

8. Verfahren nach Anspruch 7, bei dem die dritte Portion Wasser 0,5 bis 10 Gew.-%, bezogen auf die organische Phase, beträgt.

## Claims

1. A process for the preparation of highly reactive polyisobutenes, in which
a) isobutene is polymerized in the presence of a complex of boron trifluoride and at least one cocatalyst in a liquid organic phase at a reaction temperature of from -60 to -4°C,
b) the organic phase which is substantially at the reaction temperature is brought into intimate contact with a first portion of water whose temperature is at least 80°C above the reaction temperature, with formation of an emulsion which comprises finely dispersed water droplets in the organic phase,
c) a second portion of water is added to the emulsion with formation of a continuous, predominantly organic phase and a continuous, predominantly aqueous phase, and
d) the organic phase is separated from the aqueous phase.

2. The process according to claim 1, in which the sum of the first and second portions of water is from 5 to 100% by weight, based on the weight of the organic phase, and the weight ratio of the first portion to the second portion is from 1:10 to 10:1.

3. The process according to claim 1 or 2, in which the emulsion obtained by bringing the organic phase into contact with the first portion of water has a mixing temperature of from +5 to +50°C.

4. The process according to any of the preceding claims, in which the cocatalyst used is a secondary alcohol of 3 to 20 carbon atoms.

5. The process according to any of the preceding claims, in which polymerization is effected in step a) until polyisobutene molecules having a number average molecular weight of from 1800 to 5000 are obtained.

6. The process according to any of the preceding claims, in which, in order to separate the organic phase from the aqueous phase, first the main amount of the aqueous phase is removed, the organic phase comprising still dispersed water droplets is passed through an apparatus having coalescence-promoting internals and the coalesced aqueous phase is separated from the organic phase.

7. The process according to claim 6, in which the organic phase freed from the main amount of the aqueous phase is mixed with a third portion of water before the passage through the apparatus having coalescence-promoting internals.

8. The process according to claim 7, in which the third portion of water is from 0.5 to 10% by weight, based on the organic phase.

## Revendications

1. Procédé de préparation de polyisobutènes fortement réactifs, dans lequel
a) on polymérise de l'isobutène en présence d'un complexe de trifluorure de bore et d'au moins un cocatalyseur dans une phase organique liquide, à une température réactionnelle de -60 à -4°C,
b) on met en contact intime la phase organique présentant sensiblement la température réactionnelle avec une première partie d'eau, dont la température est d'au moins 80°C au-dessus de la température réactionnelle, avec formation d'une émulsion qui contient des gouttelettes d'eau finement dispersées dans la phase organique,
c) on ajoute une deuxième partie d'eau à l'émulsion en formant une phase cohérente, principalement organique, et une phase cohérente, principalement aqueuse, et
d) on sépare la phase organique de la phase aqueuse.

2. Procédé suivant la revendication 1, dans lequel la somme des première et deuxième parties d'eau est de 5 à 100% en poids, par rapport au poids de la phase organique, et le rapport pondéral entre la première partie et la deuxième partie est de l'ordre de 1/10 à 10/1.

3. Procédé suivant la revendication 1 ou 2, dans lequel l'émulsion obtenue par mise en contact de la phase organique avec la première partie d'eau présente une température de mélange de +5 à +50°C.

4. Procédé suivant l'une des revendications précédentes, dans lequel, comme cocatalyseur, on utilise un alcool secondaire comportant de 3 à 20 atomes de carbone.

5. Procédé suivant l'une des revendications précédentes, dans lequel, dans l'étape a), on polymérise jusqu'à obtenir des molécules de polyisobutène présentant un poids moléculaire moyen numérique de 1800 à 5000.

6. Procédé suivant l'une des revendications précédentes, dans lequel, pour séparer la phase organique de la phase aqueuse, on élimine tout d'abord la quantité principale de la phase aqueuse, on conduit la phase organique contenant des gouttelettes d'eau encore dispersées au travers d'un appareillage présentant des éléments encastrés favorisant une coalescence et on isole la phase aqueuse coalescée de la phase organique.

7. Procédé suivant la revendication 6, dans lequel, avant le passage à travers l'appareillage présentant des éléments encastrés favorisant une coalescence, on ajoute une troisième partie d'eau à la phase organique libérée de la quantité principale de la phase aqueuse.

8. Procédé suivant la revendication 7, dans lequel la troisième partie d'eau est de 0,5 à 10 % en poids, par rapport à la phase organique.
